# EUROPEAN PATENT APPLICATION

(11) **EP 4 715 716 A1**
(43) Date of publication of application: **25.03.2026**
(21) Application number: 24383014.8
(22) Date of filing: 23.09.2024
(51) Int. Cl.: G06Q 30/0202, G06F 16/22, G06Q 50/34, G07F 17/32

(54) **METHODS OF RECEIVNG AND GENERATING INFORMATION USING AN ONLINE DATA PLATFORM**

(71) Applicant: Power Leisure Bookmakers Limited, Dublin 4 (IE)
(72) Inventor: COBLEY, Matthew, Dublin 4 (IE); CUNHA, Joao, Dublin 4 (IE); CONTRERAS, Sergio, Dublin 4 (IE); BARBER, Michael, Dublin 4 (IE)
(74) Representative: HGF

(57) **Abstract**

A computer-implemented method is provided. The method comprises receiving event information in real time; processing the received event information into a plurality of representative data categories; generating a plurality of simulations, wherein each simulation comprises a plurality of simulated outcomes that are each associated with one of the plurality of representative data categories; storing the simulated outcomes for each simulation; receiving a message from a requesting device responsive to a user input, the user input being indicative of an expression having a condition relating to the event information; identifying a set of representative data categories associated with the expression; determining, based on evaluating the stored simulated outcomes that are associated with the identified set to the condition, an output value that comprises the proportion of simulated outcomes of the identified set that satisfy the condition of the expression relative to non-satisfying simulated outcomes; and generating an output expression based on the output value.

## Description

### BACKGROUND

Aspects and examples of the present disclosure relate to a computer implemented method relevant to an online data platform. In particular, aspects and examples of the present disclosure relate to methods of processing and storing real time event information, and evaluating the stored information to generate a customized output responsive to a user request. Further aspects and examples relate to a server for performing the method.

### TECHNICAL FIELD

Online data platforms are provided with large amounts of real world information to generate, and provide, customized content for users. Such real world information, which may include sporting event information, when provided to and/or captured by such platforms, may be utilised within one or more models provided within various computer-based systems supporting the platform (e.g., with online capabilities). That is, the received real world information may then be utilised and processed by the online platform to provide relevant information to the user.

A user (e.g., a customer) may request a customized subset of information based on the information stored within the platform. Such a request may comprise one or more conditions associated with the information, for example, in view of potential outcomes, or predicted occurrences, of current (real world) events taking place in real time. Such events, by example, may refer to sporting events, live contests, or similar.

In conventional systems, in order to provide such information in real time responsive to user requests, traditional platforms have a fixed structure. That is, such traditional systems may prepare, or prepackage, subsets of received real world information which are provided on the platform. That is, the user may request and receive this pre-packaged information from the platform.

Presently, there is significant growth of real world available information, where events across the world are readily available and of potential interest to the user. Whilst such information may be received by traditional platforms, the structure provided by traditional platforms is inflexible and limited in customization opportunity for the user. That is, whilst the systems may receive large amounts of information, such systems are too inflexible to run customized queries (e.g., user queries) in real time.

In addition, the increasing growth and availability of this real world information requires larger amounts of data requiring additional processing power, network bandwidth, and storage capabilities. However, the fixed nature of these conventional platforms and systems means that maintenance and storage of this data is inefficient, which limits potential for growth and scalability. That is, in view of the increasing amount of information available, conventional systems cannot scale to store and process this information at low latency (i.e. in real time). Thus, any growth of such models to adapt to the increasing amount of information received is limited and inefficient.

### BRIEF SUMMARY

The present invention looks to address and/or mitigate at least some of the problems described above.

According to a first aspect of the present disclosure, there is provided a computer-implemented method (e.g., a method performed by one or more network-connected computing devices, such as one or more servers) comprising: receiving event information in real time; processing the received event information into a plurality of representative data categories; generating a plurality of simulations, wherein each simulation comprises a plurality of simulated outcomes that are each associated with one of the plurality of representative data categories; storing the simulated outcomes for each simulation; receiving a message from a requesting device responsive to a user input, the user input being indicative of an expression having a condition relating to the event information; identifying a set of representative data categories associated with the expression; determining, based on evaluating the stored simulated outcomes that are associated with the identified set to the condition, an output value that comprises the proportion of simulated outcomes of the identified set that satisfy the condition of the expression relative to non-satisfying simulated outcomes; generating an output expression based on the output value.

In a further aspect, the method further comprises converting the output value into an adjusted output value based on one or more preset criteria; generating the output expression comprising the adjusted output value and a descriptor comprising information on the identified set of representative data categories; and outputting the generated output expression.

In a further aspect, the method comprises wherein evaluating the stored simulated outcomes comprises: forming a query comprising the identified set of one or more representative data categories and the related condition, evaluating the query using the simulated outcomes that are associated with the identified set and the condition; and determining the output value based on the proportion of simulated outcomes of the identified set that satisfy the condition of the expression relative to non-satisfying simulated outcomes.

In a further aspect, the method comprises that the condition is indicative of a comparison to a predicted outcome relevant to the event information.

In a further aspect, the method comprises receiving a user request relevant to the generated output expression.

In a further aspect, the method comprises that the received event information comprises a plurality of real world outcomes, and further comprises: processing the real world outcomes so as to determine one or more of the representative data categories of the identified set that are associated with the real world outcomes; determining, from the stored simulated outcomes, a plurality of simulated outcomes that correspond to the plurality of real world outcomes; updating the stored simulated outcomes based on the real world outcomes.

In a further aspect, the method comprises: determining that the identified set of representative data categories associated with the generated output expression has been updated with real world outcomes; determine an output result relevant to the generated output expression based on evaluating the updated stored outcomes that are associated with the identified set to the condition, the evaluating comprising: forming a query comprising the identified set of one or more representative data categories and the related condition, and evaluating the query based on the real world outcomes that are associated with the identified set to determine the updated output value, wherein, if the condition of the query is satisfied, setting a result of the evaluation as true, and wherein if the condition of the query is not satisfied, setting a result of the evaluation as false; outputting the determined output result.

In a further aspect, the method comprises that the user input comprises a signal for determining a relevant expression so as to identify the set of representative data categories.

In a further aspect, the method comprises that the user input comprises the expression, and the method further comprises: processing the expression so as to identify the set of representative data categories.

In a further aspect, the method comprises that upon continuing to receive event information in real time: updating the plurality of simulations to generate simulated outcomes across the plurality of representative data categories based on the received event information.

In a further aspect, the method comprises that upon continuing to receive event information in real time: processing the received event information into the plurality of representative data categories including at least one further representative data category; and generating an updated plurality of simulations to generate simulated outcomes across the plurality of representative data categories including the at least one further representative data category, based on the received event information.

In a further aspect, each of the plurality of representative data categories are represented by at least one identifier; and wherein the at least one identifier comprises a descriptor relevant to of an associated real world event; or wherein the at least one identifier comprises a link to identifying an associated real world event.

In a further aspect, the at least one identifier is represented in a data format that is consistent for each of the plurality of representative data categories across all of the received event information.

In a further aspect, the simulated outcomes associated with a respective representative data category are stored in respective columns of a matrix; and wherein each of the plurality of simulations corresponds to a vector row of the matrix, each simulation having at least one simulated outcome associated with a respective representative data category.

In a second aspect, one or more servers are provided, the one or more servers configured to perform the method as described in any of the aspects above.

In a third aspect, a system, comprising one or more servers and a computing device (e.g., a user device in connection with the one or more servers), is provided, wherein the system (e.g. by the one or more servers) is configured to perform the method of: receiving event information in real time; processing, the received event information into a plurality of representative data categories; generating a plurality of simulations, wherein each simulation comprises a plurality of simulated outcomes that are each associated with one of the plurality of representative data categories; storing, the simulated outcomes for each simulation. The method further comprises transmitting, by the computing device (e.g., a user device), responsive to a user input at the computing device, a message indicative of an expression having a condition relating to the event information. The method further comprises (e.g., by one or more servers) receiving the message; identifying a set of representative data categories associated with the expression; determining based on evaluating the stored simulated outcomes that are associated with the identified set to the condition, an output value that comprises the proportion of simulated outcomes of the identified set that satisfy the condition of the expression relative to non-satisfying simulated outcomes; generating an output expression based on the output value. In a further aspect, the method further comprises outputting the generated expression to the computing device.

In a fourth aspect, a non-transitory computer-readable medium (e.g., one or more computer-readable mediums) is provided comprising instructions that, when executed, cause a processor of a computing apparatus (e.g., a processor of the one or more servers) to perform the method of any of the aspects above.

### BRIEF DESCRIPTION OF THE DRAWINGS

Embodiments of the invention will now be described, by way of example, only, with reference to the accompanying Figures, in which:
FIG. 1 illustrates exemplary hardware in accordance with examples of the present disclosure;
FIG. 2 illustrates an example system in accordance with examples of the present disclosure;
FIG. 3 illustrates a platform in accordance with examples of the present disclosure;
FIG. 4a illustrates an example method in accordance with examples of the present disclosure;
FIG. 4b illustrates an example method in accordance with examples of the present disclosure;
FIG. 5 illustrates an example method in accordance with examples of the present disclosure.

### DETAILED DESCRIPTION

Examples of the present disclosure will be discussed in relation to an online data platform, and, by way of some examples described, to an online sports betting platform. However, such discussion is made by way of example only. It will be similarly appreciated that examples of the present disclosure may similarly apply in regard to any online data platform generating and providing customized data output.

Such platforms are provided with real world information to generate, and provide, customized content for users. These platforms may acquire real world (e.g., events happening in real time) information from multiple and various real sources, by example, such as: websites, applications, broadcast information, an information provider (e.g. someone at the event), social media, merely by way of example. The information received may be utilised and processed by the platform to provide relevant information to the user. Such platforms may be provided (e.g. stored) within various computer systems with networking (or online) capability.

By reference to the above, this real world information generates a significant amount of data to be received and processed. As indicated, present systems comprise technical constraints in processing this large amount of real world data and providing information to the user with minimal delay (e.g., at near real time).

For example, when the online data platform represents a betting platform, this data is utilised and processed so as to provide future possibilities and outcomes. As such, these generation of outcomes and probabilities, should be generated in (near) real time, as generation of outcomes and probabilities based on incorrect, or out of date, information, may adversely affect customer experience.

With reference to a betting platform, the term market, or bets, may be used, and may comprise at least one selection relevant to possible outcomes. These selections may refer to associated conditions associated with the possible outcomes (e.g., to be less than/greater than, equal to, a value). For example, the selections may comprise: team A to win; team A to win by X points; player A to score first. That is, the term markets may include a number of selections providing the user with a betting opportunity.

The information above may be comprised within information (e.g., product information) which may be provided to a user. In examples - e.g., relevant to a betting platform - this information as a whole may be referred to as a product catalogue. A product catalogue may comprise all of the above. That is, a product catalogue may comprise the stored events, markets and selections, as may have been generated based on the real world information by the platform (e.g., the online data platform).

In conventional systems, in view of the amount of data available, present data systems, or platforms such as sports betting platforms, provide a fixed (or pre-packaged) product (or information) to the user, based on a sub-set of the real world information acquired. That is, the acquired real world information is processed, and stored, to update and provide these fixed products to the user.

However, in processing the received information to these fixed products (e.g., the above-described product catalogue), a significant amount of the real world information is lost (e.g., filtered), and it is not possible to re-obtain (or reverse engineer) this information. That is, whilst increasing amounts of data are available, this requires additional processing power, network bandwidth, and storage for such systems to process this data into the fixed products. That is, within current systems, data is inefficiently utilised, and maintenance and storage of this data is inefficient. Moreover, the relevant datasets are too large, and restrictive, to run queries (e.g., user queries) in real time.

That is, current platforms and systems are constrained by scale and technical limitations to provide customizable output in response to user request. Moreover, technical constraints mean that queries cannot be performed across the full set of available (e.g., real world) data in real time .

In examples relating to betting platforms (e.g., sports-centered betting), trading models managing and providing the markets are now increasingly online. Such trading models, or herein platforms (e.g., sports betting platforms), provide a large number of opportunities for a user to select, through use of a specific data design to represent the set of available betting opportunities. Such conventional trading models, or platforms, are based on the conventional fixed product structure set out above.

That is, whilst offering a large number of opportunities; such models are inflexible and limited in customization opportunity for the user, as the large number of opportunities available are often predetermined, or prepackaged, selections to be provided to the user. In particular, there is an associated delay (or latency) with any updating or changing of such prepackaged selections. In examples, these may be performed at various third party systems (trading systems), and transferred to the platform (e.g., separate platform) for selection to the user. This consequently provides a delay in the event information taking place in the real world, and the selection availability to the user.

In detailed examples of the present disclosure, the term event may be used to refer to an activity, happening or occurrence, taking place. In examples, it may refer to a real world event, that is, an event happening, or scheduled to happen, in the physical (real) world, such as a sporting event (e.g., a match, fixture or contest), or any feature or occurrence within such a match. In other examples, events may refer to simulated events (e.g., e-sports events or similar). The term event may be used to refer to the activity, or fixture, as a whole (e.g., a sporting match, or contest) and/or may also comprise specific in game events or occurrences (e.g., goals, free-kicks, scores), and/or player or team occurrences or statistics resulting from the activity (e.g., assists, points) resulting, or associated with, the activity. That is, an event may be any happening, or occurrence, associated with something taking place, or scheduled to take place, from which information can be stored and obtained by the platform. In particular, and relevant to a betting platform, an event may be associated with any data associated with a representation of features from a sporting fixture, or match, upon which a user may wager, or place a bet.

In examples, each event (that is, any event occurring) may comprise, or generate, a set, or number, of possible outcomes relevant to various associated event information. For example, event information may generate a number of possible outcomes associated with a result for a sporting event (win, loss, draw). These possible outcomes may be predicted, or simulated, by the platform.

Reference to the above-detailed terminology may be made by any of the examples detailed below.

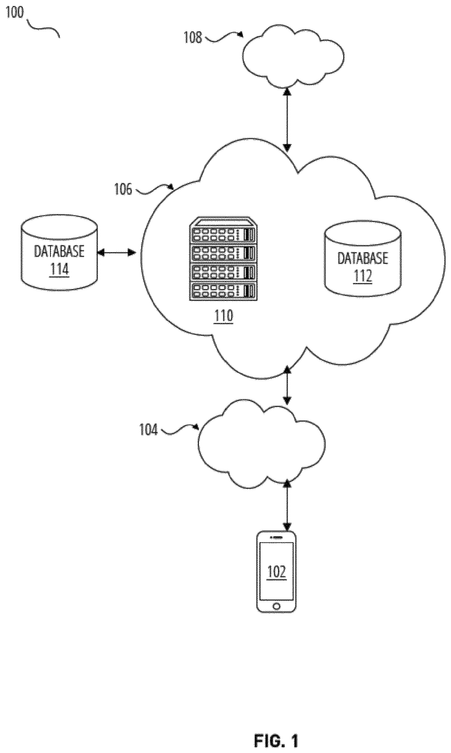

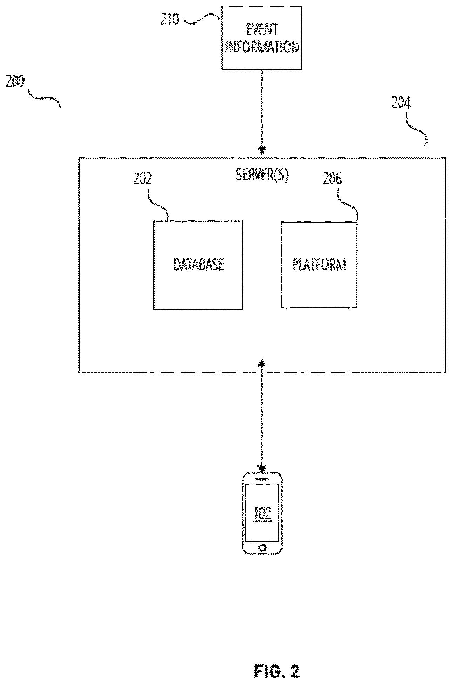

FIG. 1 illustrates an example network 100 relevant to examples of the present disclosure. In particular, FIG. 1 illustrates hardware connected by an example network (or network architecture, or layout) upon which a data platform (or data system), may be provided (e.g., the platform in accordance with FIG. 2).

Referring to FIG. 1, an electronic device (or user device) 102 is provided in connection to a network 100, where network 100 may comprise one or more connected networks. Herein, an electronic device 102 may refer to a mobile device (e.g., smartphone, tablet), a computing device (e.g., a desktop or laptop computer), or any other general electronic or computing device. In the example shown, electronic device 102 is located within (connected to) a local network 104, which may be a home or personal network. That is, electronic device 102 is connected to, and communicating over, (e.g., receiving/transmitting data over) local network 104.

Each local network 104 (e.g., one or more local networks, including remote network 108), may be connected to internet 106. That is, the electronic device 102 may be provided with access to the internet (network) 106 though the local network 104. However, in other examples, the electronic device 102 may be directly connected to the internet 106.

The electronic device 102 may access one or more servers 110 or databases (e.g. data storage) 112 through means of connection to the internet 106. The electronic device 102 may communicate with the one or more servers 110, which may in turn be connected, or have access to, one or more databases 112. In examples, database 112 may be provided on one or more computers, or servers, in a network (e.g., internet 106, local network 104 or remote network 108). For example, one or more databases 114 may be provided in a remote network, and accessible via the internet 106 by either the one or more servers and/or user device 102. Database 112, 114 may be provided as cloud storage, or distributed storage, remotely accessible using internet 106 and/or remote networks 108.

FIG. 2 illustrates an example system 200 in accordance with examples of the present disclosure. The example system 200 may comprise at least one electronic device 102 (e.g., electronic device 102 in accordance with FIG. 1), in communication with a network (e.g., internet 106, and/or networks 104, 108 as referenced within FIG. 1). Herein, electronic device 102 may comprise any computing device operated, or operable, by a user, as set out in FIG. 1.

In an example, the system 200 may be located, or comprised, within a network, e.g., one or more of internet 106, local network 104 and/or remote network 108. That is, the system may be comprised within (e.g., distributed), at least partially, within one or more of the described networks. As illustrated in FIG. 2, the system 200 may comprise one or more servers 204 (e.g., servers 110), or further computing devices, which may be connected within the network. The one or more servers 204 may comprise one or more databases 202 (e.g., storage, for example, database 112, database 114). The databases 202 may be accessed (e.g., to transmit/receive data) by any of the one or more connected servers 202. In further examples, the databases 202 may be accessed by user device 102. In further examples, one or more databases may be accessed remotely (e.g., by the one or more servers).

The electronic device 102 may communicate with the one or more servers 202 via the network (e.g., internet 106). In some examples, such as shown in FIG. 1, the electronic device 102 may access the internet 106 via local, or home network 104. In examples, whilst reference may be made to network 106 being the internet by way of example, this is not limiting, and network 106 may comprise any type of network known in the art, or any combination of known networks thereof.

The system 200 may comprise a data platform, or data system, 206. Herein, in the detailed examples described, data platform 206 may be comprised within (or alternatively, connected to/coupled to) the one or more servers 202 (e.g., via network 106), and may be configured to access one or more databases 202. That is, in examples, the data platform 206 may be located or distributed within one or more servers 204, computing devices and/or databases 202 within the network 106. That is, the data platform 206 may be distributed across one or more network-connected devices. For example, the data platform 206 may be comprised, or partially comprised, within one or more servers 204. In further examples, the data platform may be at least partially comprised within electronic device 102, or one or more devices of a local network (e.g., local network 104).

In some examples, as shown in Figure 2, the data platform 206 and one or more databases 202 may be comprised within the one or more servers 204. However, in other examples, at least one of the platform 206 and/or databases 202 may be stored remotely from the servers, and the one or more severs 204 configured to communicate to receive/transmit data to and from the platform and databases via network 106.

The system 200 may receive event information 210 from a plurality of data sources. The plurality of data sources may communicate with the system 200 (e.g., one or more servers 204, database 202 and/or platform 206) via a network connection (e.g., connection to network 106). The system 200 may receive and process the information from the plurality of data sources and process the received information. In examples, the processed information may be stored by the platform in one or more databases 202.

By way of example, the received event information 210 may comprise one or more sporting event information. Such event information may be historical event information (e.g., relating to information, on data, relating to events which have taken place). Historical event data may be acquired, or received, from various sources configured to provide and/or store such information. The event information 210 may also comprise real time, or live, event information. Real time event information may comprise data from one or more real-time (live) sporting events. In other examples, the real time event information may comprise received information from one or more applications, websites, and devices (e.g., received from computing devices of attendees at the one or more events). The real time information may comprise live, or real time data, on upcoming, or scheduled, live or real time events. The real time information may further include data obtained from sources such as broadcast data, social media data, media (e.g., television, radio) data, etc. However, such examples are by no means intended to be limited, and it will be appreciated that the platform may (e.g., via network 106) acquire and obtain information on events from a large number of sources.

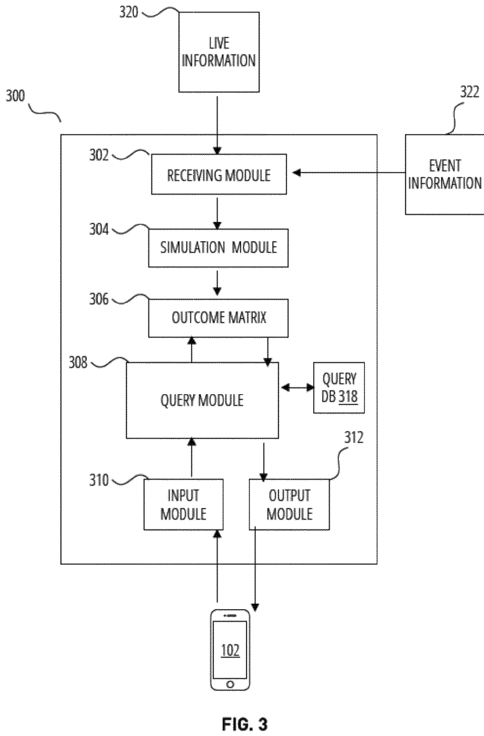

FIG. 3 illustrates a platform 300 in accordance with examples of the present disclosure. Herein, platform 300 may be described with reference to platform 206, as comprised within system 200, as described with reference to FIG. 2.

With reference to FIG. 3 the platform 300 (e.g., platform 206) is described by means of reference to modules. However, such terms are described by way of example only, and it will be appreciated that one or more of such modules and features described therein) may also be combined (e.g., as a single module). The modules described may be connected via a network (e.g., network 106), and in some examples, may be distributed across at least one server (e.g., one or more servers 204). The modules may be connected to, or stored by, one or more databases (e.g. databases 202) within the network (e.g., data bases 104) and/or remote databases (e.g., database 114). In some examples, one or more modules may be distributed (or located) within one or more connected networks (e.g., local network 104; remote network 108).

As described with reference to FIG. 2, the platform 300 may receive real world (or live) data 320 from a plurality of various information sources. As illustrated in FIG. 3, the platform 300 may comprise a receiving module 302 for receiving and/or processing real world information. Real world information may comprise live, or nearly live, information relevant to events taking place in real time. Real world information may also comprise real time information on future, or upcoming, events (e.g. due to be taking place) in the real world. That is, such future events may have associated information which may be received by the receiving module 302 of the platform. The real world information on live events (e.g., current events/future events) may continue to be received and/or updated. For example, events on sporting events due to take place (e.g., in the coming weeks, months) may have associated information which is received by receiving module on the build up to such events taking place. That is, this information may still be deemed live, or real time, information, as it relates to the current (or live) information associated with such events.

The receiving module 302 may process the received information and transfer the information as an input to a simulation module 304. However, in other examples, receiving module 302 and simulation model 304 may be combined. That is, the real world information 320 may be received and processed directly within the simulation module (e.g., the simulation module is configured to process real world, or live, data.)

The receiving module 302 (or alternatively, combined receiving/simulation module 304) may also receive one or more various event information 322 (e.g., historical, or stored information) relevant and/or corresponding to the real world (live) information 320. For example, this may be historical, or stored, data relevant to the one or more events (e.g., stored in one or more databases). By way of example, such data may relate to past information associated with matches, players, outcomes, etc. In some examples, this information may (additionally) be received and/or processed by the receiving module 302.

The simulation module 304 may comprise one or more algorithms for predicting and running simulations. It will be appreciated that various algorithms and/or models for running such simulations will be known to the skilled person and may be used herein. In examples of the present disclosure, Monte Carlo simulations may be used, wherein a plurality of simulations may be generated (or output) relevant to an event (e.g., a sporting event, or contest). This collective output (e.g., the simulated outcomes) may be used to generate a set of probabilities for one or more outcomes relevant to the event(s) occurring.

The one or more algorithms and/or models may look to imitate, or simulate, real world progress of an event (e.g., one or more sporting events or fixtures). For example, and relevant to the examples discussed above, the simulation module 304 may run and/or generate various simulations so as to obtain possible, or potential, outcomes relevant to various associated event information. In at least some of the detailed examples described herein, the simulations may relate to one or more sporting events (e.g., simulated runs, or progress, of sporting events).

The simulated outcomes corresponding to the simulations may be stored in an outcome matrix, or outcome database 306. Each simulated event may have a plurality of simulated outcomes to be stored.

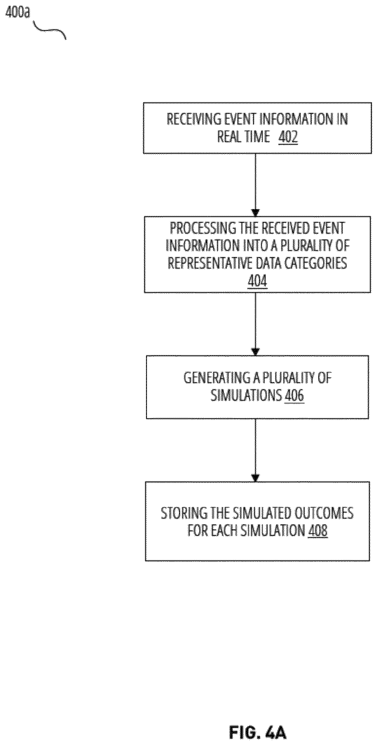

Reference will now be made to FIG. 4A, which illustrates a method in accordance with examples of the present disclosure. In particular, FIG. 4A illustrates a method of processing and storing real world data within the platform (e.g. 300, as described in Fig. 3), and in particular, to retain and describe the output from models processing and storing the data therein (e.g., stored data of the simulated outcomes of the simulation module 304) in a way that preserves and identifies the raw real world information as received.

That is, with reference to FIG. 4A, method 400a is described. Method 400a may be a computer-implemented method. In detailed examples, method 400a may be a computer-implemented method as performed by the one or more servers 204 (e.g., a processor of the one or more servers with reference to FIG. 2), and may be described by reference to the platform 300 detailed at FIG. 3 and the modules described therein. However, this is by way of example only. For example, in other embodiments (e.g., when platform 300 is distributed, and/or modules thereof are comprised across one or more networks), method 400a may be performed by one or more computing devices across the one or more networks.

At step 402 of FIG. 4A, the method comprises receiving event information in real time. As described, the real world, or live, event information (e.g. real time information 320) may be received by receiving module 302 and/or simulation module 304, and the event information may herein be described relevant to at least one sporting event (e.g., a match, a game, or similar, which is taking place, or due to be taking place, in the real world). The event information received may also comprise associated historical or stored information (e.g., event information 322) associated with the at least one sporting event. The event information may be received for, or during, at least a time period (e.g., an ongoing period of time). The time period may be any duration of time relevant to the time duration of one or more events (e.g., until the ending duration of a match from which relevant event information has been, or is being, received) for which the platform is configured to receive event information. In other examples, a time period may herein refer to a pre-set, or pre-configured, amount of time for which the platform is configured to receive and process real world information. In other words, the platform may continue to receive real world information (e.g., live information 320) on events for a duration of time (duration of a time period).

At step 404, the received event information may be processed into a plurality of representative data categories. That is, the platform (e.g. at simulation module 304) may process all of the real world information received into a plurality of representative data categories. For example, one or more models and/or algorithms (e.g., within platform 300, such as simulation module) may process the real world information into representative data categories.

The representative data categories may herein comprise an identifier (a canonical identifier, or real world identifier) which may represent, or indicate, the event information described by the category. That is, the real world information may be retained, or described, by the assigned data categories and associated identifier (e.g., a descriptor relevant to an associated real world event). The identifier of the data categories may be obtained and/or inferred from the received real world information. In examples, for example of relevance to sporting events or similar, the identifier (e.g., at least one identifier) may comprise a descriptor of a real world entity, event and/or outcome to be associated (or inferred) from the received real world information (e.g., when simulating the result). In other examples, the at least one identifier may comprise a link (or pointer) to identifying a real world entity, event and/or outcome associated (or inferred) from the received real world information. The at least one identifier is represented in a data format that is consistent for each of the plurality of representative data categories across all of the received event information during the time period. In other words, whilst representing different aspects of received event information, each of the identifiers may have a consistent grammar, or syntax.

By way of example, the real world data categories will now be described relevant to sporting event information. In this example, when received event information relates to sporting events, at least part of the real world information being received may relate to a team and/or match. As such the algorithm and/or model (e.g., within simulation module 304) may assign or process the received information into associated data categories as "Points_Match_A" or "Win_Match_A". That is, the simulation module may identify that the event information relates to a match (e.g. event descriptor), comprising team A (e.g., a real world entity), and may infer or determine that results, or outcomes, may be associated with "Points" or "Win" (e.g., outcome descriptors). That is, the identifier may comprise at least one of a real world entity descriptor (e.g., a team; a player; a venue), an event descriptor (e.g., a match; a fixture; a football season; a league), and an outcome descriptor (e.g., a win; points; a goal). In the example herein, these notations may, by the above descriptors, translate to "points scored across the whole fixture by team A" and "Team A to win the Fixture". In other words, the simulation processes the data into representative data categories relevant to the outcomes to be estimated. Herein, the consistent notation and syntax for the data categories is represented by A_B_C, however this is merely by way of example, any consistent notation or grammar could be used. It will be appreciated that further, or alternative, descriptors may be assigned of relevance to the received event information.

At step 406, the method comprises generating a plurality of simulations, wherein each simulation comprises a plurality of simulated outcomes that are each associated with one of the plurality of representative data categories. That is, the simulation module 304 generates a plurality of simulations (e.g., simulated outcomes) for the data categories. In some examples, each run of the simulation may generate information for a plurality of data categories. That is, when one or more of the plurality of data categories relate to a same, or related, event (e.g., the same match or fixture and/or are related to one or more further events), each simulation run may generate an estimate corresponding to a simulated outcome for this category.

At step 408, each of the simulated outcomes may be stored for each simulation.

For example, again referring to the examples above, for the representative data categories "Points_Match_A" and "Win_Match_A", the platform (e.g. simulation module 304) may run a large number of simulations corresponding to estimated, or predicted outcomes (e.g., associated with corresponding real world event information that is represented by the data category).

In examples, the simulated outcomes of each of these simulations may be stored in a matrix or database (e.g., an outcome matrix 306). The representative data categories may comprise, or represent, the columns of the matrix, and the rows of the matrix represented by each of the simulation runs. That is, vector columns are the simulated outcomes associated with a data category, where one row in the matrix represents all of the outcomes associated in a single run of the model.

In the example above, example columns of the outcome matrix could be: Points_Match_A: 60, 55, 75 [...], e.g., an integer, numerical value representative of the data category, which in this case, relates to a number of points likely to be achieved in the simulated real world event. In the example column "Win_Match_A", each of the vector rows could be 1, 0, 1, that is, a Boolean or binary, value, as there are only two representative outcomes for the simulation. That is, each value (e.g., simulated outcome) is provided as a (scalar) value in accordance with the format relevant to the prediction.

As indicated, each of the plurality of representative data categories are therefore represented by at least one identifier (e.g., the column identifier in the matrix), which may describe (that is, comprises a descriptor of) a real world event relevant to the simulated outcomes stored in the associated column. In further examples, the at least one identifier may comprise a link or pointer to identifying the associated real world entity, as in the examples above. That is, simulated outcomes are stored within the columns of the matrix that preserve (or can be identified as relevant to) the received real time event information of which it is simulating.

As indicated above, the platform 300, e.g., by receiving module 302 and/or simulation module 304, may continue to receive event information (e.g., for the duration of a time period). As such, the simulation module 304 may continue to run simulations relevant to the received event information, so as to generate simulated outcomes relevant to real time (e.g., real world) event occurrences That is, upon continuing to receive the information in real time (e.g., further information on real world event(s)), the plurality of simulations stored in the database (e.g., stored simulated outcomes) may be updated (replaced).

In further examples, when continuing to receive event information in real time, the simulation module 304 may process the information to identify (determine) one or more of the representative data categories relevant to the received information. In such examples, when relevant representative data categories are identified, may continue to run (re-run) simulations relevant to this information, and update the simulated outcomes. That is, at any point, the simulated outcomes stored in the matrix represent simulated outcomes associated with the most current, or recently, received real world information.

In addition, the received event information may be processed into at least one further representative data category. For example, during the event taking place, event information may be received which may be processed into a new representative data category. The simulation module 304 may generate (e.g., continue to run simulations) which include simulated outcomes for this further representative data category. That is, the simulation module 304 may generate an updated plurality of simulations to generate simulated outcomes across the plurality of representative data categories including the at least one further representative data category, based on the received event information. The simulated outcomes may be stored in the database (outcome matrix 306)

Herein, whilst various processes and features of platform 300 are discussed above, respective to one or more described modules of FIG. 3, this is by way of example only, it will be appreciated that one or more modules (and the processes performed therein) may be herein combined.

Conventionally, in traditional platforms, a user may be provided with information on one or more pre-configured ("pre-canned") selections of a stored database. For example, with relevance to a betting platform, a user may be provided with a betting opportunity (which may comprise one or more pre-canned selections) with associated outcome predictions (e.g., associated prices). In such cases, conventional platforms and systems are constrained by scale and technical limitations to provide customizable output in response to user request.

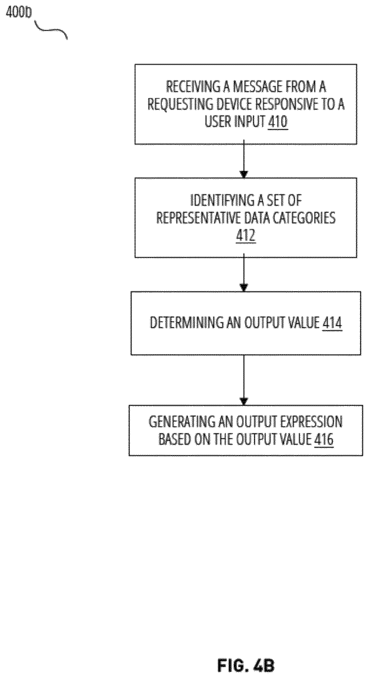

However, in detailed examples, as will now be described relevant to FIG. 3 and FIG. 4B, the user may request and/or query the matrix so as to obtain customized information.

That is, as set out in examples as described herein, a customized set of information (e.g., betting opportunities) may be obtained from the outcomes matrix 306. In particular, this is possible as the matrix holds (that is, retains or stores) information indicative of the real world (or raw) information on real events (and relevant to the simulations) by means of the identifiable information (e.g., the identifiers associated with columns holding a plurality of simulated outcomes in the stored outcomes matrix). This information held in the matrix may be queried (e.g., by a user request, such as from device 102) to obtain customized information.

Referring to FIG. 4B, a method 400b in accordance with various examples of the present disclosure is described. In particular, method 400b may follow method 400a, as described in FIG. 4A. That is, method 400b describes a method of receiving a request for a customized output relevant to the outcomes matrix (e.g., outcome matrix 306).

At step 410, a user (e.g., a user of electronic device 102) may transmit a message (query, or request, e.g., from device 102) for a customized request of the platform (e.g., platform 300). In examples, the received message may be responsive to a user request as input to a Ul provided on the electronic device 102 (e.g., to as to provide communication with the platform 300 over the network 106, such as an application interface, web browser, or similar).

The user input may be indicative of an expression having a condition relating to the event information (e.g. information on one or more events occurring in real time), and the user input may be provided in any format through the computing device (e.g., voice input, typed input). That is, in some examples, the user request may be received in the vernacular (e.g., by an open text input format and/or a voice input). In examples, the user input may comprise a signal which may be processed (e.g., by the input module 310) so as to determine a relevant expression having a condition relative to event information from the received input. For example, the user input may comprise a signal, or indication, of information relating to an event occurring in real time (e.g., a signal relevant to a live feed, or commentary, of an event), and/or may comprise a link or signal to a pre-stored expression relevant to an event (e.g. stored remotely, and/or on the platform). In some examples, the user request may be received in specific, or set language provided, or suggested, by the interface. In other examples, the user request may comprise one or more pre-provided selections from an interface relevant to one or more events. In some examples, the user input may have features associated with one or more different events (e.g., different sporting events), and having one or more conditions associated therewith (e.g., across one or more of the events).

That is, in some examples, the user input may correspond to one or more features associated with the event information. For example, when the event information is sporting event, the user input may be associated with one or more features associated with the event: e.g., features of players, the match, teams, goals. However, any such examples are in no way intended to be limiting, and the user input may relate to one or more of such features.

The user input may comprise, or indicate, a condition associated with the features of the event information. The condition of the user request may refer to conditions, outcomes, or possibilities relevant to the event information (e.g., various conditions or outcomes relating to one or more events). That is, the condition may relate to a predicted, or predictable, outcome associated with the one or more items of one or more event information. Referring to the above examples; when the one or more features relate to a player, for example; the condition may relate to an estimate or prediction for an outcome associated with that player (e.g., scoring of a number of goals). That is, the condition may, in some examples, be associated with a wagerable feature of the event information upon which the user wishes to place a bet.

Herein, the user input may be received and processed as a message by input module 310. That is, the input module 310 may be receiving module of platform configured to receive and/or process the request. The processed user request may be passed to a query module 308 for converting the request to the query the outcome database (outcome matrix 306). In some examples, the input module 310 and query module 308 may configured as the same module.

At the query module 308, the received input may be converted into an expression (query) for querying the outcome matrix 306. That is, the format of the user input is converted into an expression (or query) relevant to the real world information identified (and stored) in the outcomes matrix 306. That is, the original user input, or user request, may be determined, or inferred (e.g., by one or more models or algorithms running on platform 300), so as to indicate (or be indicative of) this expression. By way of example, the user input may relate to an event information (e.g., a match comprising teams A and B), and an associated condition (e.g., a points difference between the two teams being less than a value, e.g., 20). The user may input this request in any format to the user device, and the device transmits this information to the platform (e.g., to be received as a message via network 106). The query module 308 may translate, or convert, this information into an expression able to query the matrix (that is, evaluate the simulated outcomes) to obtain an output.

In other words, the query module 308 therefore translates the description provided in the user input into information (expression) relevant to the set of simulated outcomes of the outcome matrix.

At step 412, the method may comprise identifying a set of representative data categories associated with the expression. That is, based on the expression as being associated with the user input, the platform 300 (e.g. query module 308) may identify a set of representative data categories of the outcome matrix 306 that have a set of relevant outcomes to this user input. That is, based on the expression associated with the user input, the model may determine which representative data categories are associated within the input. For example, the expression of the user input may be interpreted to correspond to one or more of the data categories. The user input may comprise, or be indicative of, an expression associated with "Team A to win", and the model may identify the category of "Win_Match_A" from this input. In some examples, the user input may comprise one or more selections of pre-set expressions (e.g., through an interface of the platform provided on the user device).

In some examples, the platform 300 (e.g., input module 310 and/or query module 308) may comprise one or more trained algorithms based on learning a user's input, and derive, or infer, one or more representative data categories associated with the expression. The set of representative data categories may be one or more data categories associated with the expression (e.g., identified from the user input).

For example, referring to the example above, the platform 300 may identify a set of representative data categories as "Points_Match_A" and "Points_Match_B". These identified categories which have associated simulated outcomes as stored in the matrix. These identified data categories and associated condition may form the query (or expression) to obtain information from the matrix.

For example, the generated query (or expression) may formed as:
[ "Points", "Match", "B" ], [ "Points", "Match", "A" ], "-", "abs", 20, "<" ].

This is used to query (and evaluate) the matrix (e.g., the outcomes relevant to these identified representative data categories).

It will be appreciated that this is one such example, and not intended to be a limiting example. That is, the grammar and format of such an expression or query may be different; however, the use of an expression (as opposed to a fixed relational format) provides that real world context from the user input (and relevant to the preserved information of the outcomes matrix) is retained.

At step 414, the method may determine, based on evaluating the stored simulated outcomes that are associated with the identified set to the condition, an output value that comprises a proportion of simulated outcomes of the identified set that satisfy the condition of the expression relative to non-satisfying simulated outcomes. In other words, the platform 300 may comprise generating an output value, representative of a probability or likelihood of occurrence, by evaluating the formed query against the associated simulated outcomes (e.g., as associated with the identified data categories). The formed query is evaluated against (e.g., using) the simulated outcomes that are associated with the identified set and the condition, where in the determined output value (e.g., likelihood of occurrence) is based on the proportion of simulated outcomes of the identified set that satisfy the condition relative to the non-satisfying conditions.

In other words, the evaluation in respect to the identified outcomes evaluate to either true (satisfying) or false (not-satisfying), to give an estimate of probability for the set of outcomes.

By way of example, referring to the above, and considering the simulated outcomes associated with "Points_Match_B" (e.g., Y) and "Points_Match_A", (e.g., X) stored in the matrix, the associated condition is less than 20. In other words, the identified set of data categories - which will have an associated set of simulated outcomes (here, points) is evaluated for a difference to be less than 20 (a difference between the two points in a row to be less than 20). That is, this condition is indicative of a comparison to a predicted outcome relevant to the event information.

During the evaluation, this query is compared to (or evaluated against) each row of the matrix relevant to the identified (set of) data categories, where within each row there will be a value (or simulated outcome) for both Y and X, representative of how many points were scored by each team in that specific simulation run. By way of example, this query may evaluate to false more often than true (e.g., 1200 vs 800). Therefore the output value, or likelihood, may be presented as 800/2000, 40%, or 0.4.

After performing the evaluation, at step 416, the method may comprise generating an output expression based on the output value (e.g. representative of the likelihood, or probability). That is query module, on querying the outcomes matrix 306, may receive the output value from the outcome matrix, and generate an output expression based on the received output value. In some examples, the output expression may comprise additional information to the output value (e.g., may retain information indicative of the associated data categories, and/or initial query); in other examples, the output expression may be generated as just the output value.

In examples, the generated query (or expression) used to query the outcomes matrix may be stored in a database (e.g., a query database 318). In the example of FIG. 3, this is shown as separate to, but retrievable/usable by the query module 308. However, this is not intended to be limited, and a database may be stored within (e.g., combined with) query module 308, and/or within a combined query/input/output module, or otherwise within platform 300. In other examples, query database 318 may be stored remotely in the network, and retrieved by platform 300. The generated query (expression) may be stored in the query database 318 alongside, or with an indication or link to, the generated output expression (e.g., based on the output value associated with the query) relevant to the user input.

The generated output expression may be output by the platform (e.g., by output module 312) to a user (e.g., of device 102).

Referring to the above-detailed examples, the querying (or interrogation) of the outcomes matrix may be performed by the platform (e.g., by query module of the platform 300) having direct access to the outcomes matrix. In such examples, the outcomes matrix may be stored within the same databases, or same connected network, and accessed directly by the platform 300.

Alternatively, the outcomes matrix may be provided, or stored, separately from the remaining modules of the platform 300. This may provide advantages in terms of ease of maintenance and reuse of software components. In this example, a query mechanism (e.g., performing the features as provided by query module in accordance with the examples described above) may be configured on top of the outcomes matrix to execute in accordance with the features described above.

In this example, the platform 300 may form the query (e.g., by identifying the associated set of representative categories associated with the expression of the user input), and transmit the query to execute remotely (e.g., to the stored matrix), and receive the output associated with the evaluation. Herein, the query mechanism (e.g., performed remotely) and formed query by the platform must support comparable semantics. That is, by utilizing a flexible query expression (e.g., based on associated semantics derived from the real world information), and can be utilised to predictably and accurately query (or evaluate) underlying information to generate an associated probability for combinations of real world outcomes.

By way of comparison, with relevance to a conventional data platforms (e.g., sportsbook), there is an associated market/selection layer having code thereon to combine selections and identify or match these selections specifically to rows in a database (e.g., RDBMS). This code comprises the logic to combine distinct selections. However, in the described examples relevant to platform 300, the query formed (e.g., the expression associated with the data categories derived from the user input) preserves and enables the encoding of customized opportunities or requests directly, simplifying the overall system, and improving the functionality available. In particular, this provides the system with the functionality to output customized data in real time (at low latency). In further examples and associated advantages, as discussed, this allows the system to be modularized, or distributed, to improve performance and latency.

In additional detailed examples, and of particular relevance to a betting platform, for example, the output value (e.g., as determined at step 414) may refer to an initial value, or probability, indicative of the simulated results. In further examples, this raw output value may be adjusted for outputting to the user. That is, the output value may be adjusted into a price associated with the probability of occurrence. In these examples, the method may further comprise converting the output value into an adjusted output value based on one or more preset criteria; generating the output expression comprising the adjusted output value and a descriptor comprising information on the identified set of representative data categories; and outputting the generated output expression.

That is, in some examples, the platform 300 (e.g., query module 308) may be configured to adjust or convert the output value (e.g., the raw output, or probability) into an adjusted output value (e.g., an adjusted format, or number of the output value) based on pre-set criteria. In some examples, the pre-set criteria may relate to the format of presenting the output value to the user (e.g., in an adjusted numerical, or grammatical format). The platform (e.g., query module 308) may generate an output expression (e.g., message), which comprises the adjusted output value and a descriptor (e.g. which may retain information on the representative data categories), which provide the user with a customized output expression relevant to the received request. This generated output expression may be associated with the generated query (e.g., stored in query database 318 in correspondence to the generated query), and may be output by the output module 312.

In some examples, the adjusted value may include, or comprise, margins or prices (e.g., based on one or more preset criteria), and the descriptor may describe outcomes (e.g., predicted outcomes, or wagerable outcomes) associated with the identified set of data categories.

Conventionally, this has been managed in trading systems or third party systems, so the product catalogue received (e.g., the information stored and comprising the database of the systems) would include prices with margins already applied. This inherently limits the flexibility and/or customizability of the opportunities and information to be offered.

That is, by way of the examples above, as the platform 300 has access to the raw information and generates the opportunities to be presented, the platform 300 may additionally add or adjust the output value to be presented to the user as an adjusted output value (or price). That is, the output expression may comprise the adjusted output value and a descriptor comprising information on the identified set of representative data categories.

That is, by some examples relevant to a sports betting platform, the output expression may represent the bet offering, or bet opportunity, for the user. However, this is not intended to be limiting to this one example, and the generated output expression may be adjusted based on any one or more preset criteria to be set within the platform relevant to the data being processed by the platform.

Once the user has received the output expression, the platform 300 may receive a (further) user request (or user input) relevant to this generated output expression (e.g., from device 102). In examples, when the output expression is provided to the user, the user may perform an input to indicate a selection of the output expression. In some examples, this may relate to an indication or request, for the platform to check, accept or confirm whether the output expression (which comprises the output value relevant to a likelihood of occurrence) will occur (that is, confirmation for the platform to perform an evaluation of the output expression once the real world events have associated outcomes, or results). That is, it may be determined (e.g., at a future point in time) as to whether the representative output value was correct.

In some examples, e.g., with relevance to a betting platform, this user input may be indicative of a user request to accept the bet, or betting opportunity. The platform 300 may store the acceptance of the output expression (that is, an indication of the received further user input accepting or selecting the expression) alongside, or with an indication to, an associated generated query (e.g., within the query database 318).

In particular, the platform 300 may continue to receive a plurality of real world outcomes amongst the received real world information. That is, these outcomes may be results, end results, or outcomes (e.g., actual happenings) associated with the same occurring events from which event information has been previously received (e.g., during occurrence thereof). In some examples, this platform 300 receives this information on real world outcomes following (in response to) a user input to select or confirm the output expression, for subsequent evaluation of the accepted expression. However, it will be appreciated that the platform 300 may continue to receive real world outcomes as event information irrespective of whether this input has been received (that is, the simulated outcomes continue to be updated with real world outcomes).

The platform 300 may process the real world outcomes (e.g., in the same manner as the event information, such as event information 312) so as to determine one or more of representative data categories (e.g., including those of the of the identified set associated with the expression) that are associated with the real world outcomes. The method may further comprise determining, from the stored simulated outcomes that are associated with the plurality of representative data categories, a plurality of simulated outcomes that correspond to the plurality of real world outcomes. The method may further comprise updating the stored simulated outcomes (e.g., including those associated with the identified set) based on the real world outcomes.

In other words, when the real world outcomes have occurred, the corresponding simulated outcomes are replaced in the outcomes matrix.

When the real world outcomes have occurred, the query (expression) associated with the generated output expression may be evaluated using the outcomes matrix, based on the real world outcomes (results) stored within the matrix. That is, the query that produced the output value may be re-evaluated to generate, or obtain, an updated output value (e.g., updated from the output value associated with the simulated outcomes, at step 414) based on outcomes in the real world.

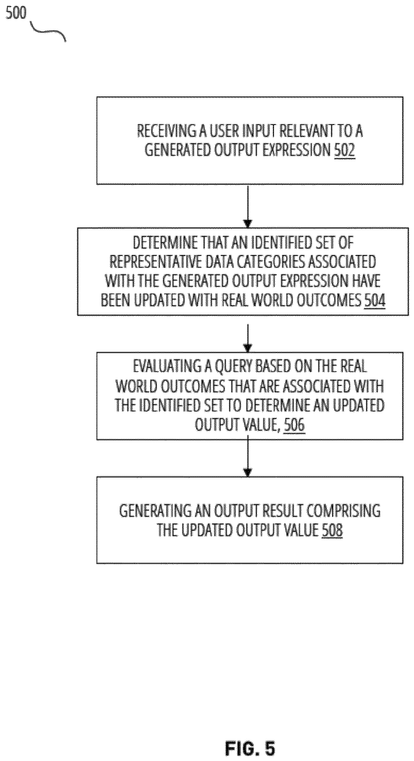

An example of evaluating the output expression to generate an updated output value (e.g., an output result) is described relevant to FIG. 5. The method 500 of FIG. 5 may take place after, or following, the method described at FIG. 4b.

At step 502, as described, the platform may receive a selection or confirmation of a user request relevant to the generated output expression. In some examples, this may be stored relevant to the associated generated query (e.g., in the query database 318). That is, an output result relevant to the generated output expression may be determined (e.g., at a later point in time) based on evaluating, by the platform, the updated stored outcomes from the outcomes matrix that are associated with the identified set to the condition.

At step 504, the platform may determine that the identified set of representative data categories associated with the generated output expression have been updated with real world outcomes. That is, in some examples, the platform 300 (e.g., the query module) may monitor (determine) whether an identified set of data categories within the outcomes matrix, which are relevant to, or associated with, the stored generated output expression, have been updated with real world outcomes. In examples, the platform (e.g., query module 308) may monitor for outcomes associated with representative data categories of the identified set of the query (expression) associated with the stored selected, or accepted, output expressions (e.g., generated output expressions which have been accepted by the user).

In some examples, the determination of whether the outcomes have been updated may be performed at regular time intervals, and/or in examples, may be performed responsive to a time period (e.g., associated with an end of one or more associated real world events).

At step 506, to evaluate the output expression to determine an updated output value, and in response to determining that the identified set of categories to the expression have been updated with real world outcomes, the evaluating may comprise forming a query (e.g., by query module 308) comprising the identified set of one or more representative data categories and the related condition. That is, the query may be formed in the same manner as set out in the examples above (e.g., relevant to steps 414-416 of method 400b). In examples, the query stored in the query database, relevant to the generated expression, may be used to re-query, or reevaluate, the matrix.

That is, the method may further comprise evaluating (e.g., by query module 308) the query based on the real world outcomes that are associated with the identified set to determine the updated output value, wherein, for each row of the outcomes matrix, if the condition of the query is satisfied, setting a result of the evaluation as true, and wherein, if the condition of the query is not satisfied, setting a result of the evaluation as false. An updated output value (determined output value) is output.

That is, during the evaluation, the query is compared to (or evaluated against) each row of the outcomes matrix relevant to the identified (set of) data categories, where within each row corresponding to the data categories, there will be a stored value. However, in this case, the value (within the column) for each of the previously simulated outcomes has now been updated with (the same) real world outcome. For example, referring to the example above with reference to Figure 4, when the associated set of outcomes - e.g. points - is evaluated for a difference to be less than 20; as the event has happened, with reference to the matrix, the outcomes (points) with associated difference will be known for each row. That is, during the evaluation, the rows either evaluate to "true" or all of the results evaluate to "false".

After performing the evaluation, at step 508, the method may comprise generating (e.g., by query module) the output result comprising the updated output value (e.g., based on the evaluation of each row of the matrix, as above). Herein, the output result may comprise the indication of the output value, or result, (e.g., true, false), with a descriptor relevant to the generated output expression.

The method may further comprise outputting the determined output result (e.g., comprising the updated output value, or an indication of the updated output value) to the user (e.g., on an interface of the electronic device 102) by the output module 312.

In some examples, the above-described examples are described in view of evaluating the output result, and may be considered in terms of management, or resulting, of a bet, when relating to a betting platform. Herein, resulting of a bet may be referred to as the process by which real world outcomes (e.g., events that have taken place, upon which bet may have been placed) are translated, or evaluated, to see if the corresponding wager occurred. That is, there are known "happened", "didn't happen" states which are evaluated against the placed bet. Herein, "true" may mean that the real world outcome/result matched the user prediction, e.g., the bet was won, and "false" may mean that the real world outcome/result did not match the user prediction, e.g., the bet was lost.

Traditionally, this may take place as a two-stage process, wherein systems (either external or internal) assign "true/false" results, which are then transmitted to a transitional (betting) platform, which finalizes (results) the overall bet. That is, as detailed with reference to the preceding examples, this resulting of selections (and corresponding logic) are often held outside, or separate, to systems or platforms receiving and generating the pre-packaged selections That is, any markets or bespoke selections much be manually created (and/or manually resulted) at the platform, which is unfeasible at a large scale under current systems.

However, by reference to the detailed examples above, the information held by the platform (e.g., platform 300) retains association with the real world event information. That is, the information is not filtered by pre-packaged selections, but instead stores the information to describe the outcomes which could occur. That is, by retaining this link (e.g., the identifier of the corresponding real world outcome being represented), the outcomes matrix is flexible so as to be updated within information once the result is known, which enables resulting to be performed within the platform itself (e.g., by querying the updated matrix for the resulting information).

Further to the advantages set out above, this therefore provides that the lifecycle of a wholly customizable request (e.g., a placed, bespoke bet), may be offered, accepted, and resulted, within the platform itself in real time. This enables scalability and growth for the platform so as to be able to receive and utilise the increasingly large amount of real world event information, and also provides that the platform is able to process and provide this information in close to real time (that is, low latency).

In further advantages, as the real world information continues to increase, and users require and expect increasing customization capabilities, the distributed and modular arrangement of the platform provide advantages for spreading processing capabilities through the system (e.g., as arranged through the network, 106).

In other examples, a non-transitory computer-readable medium (e.g., one or more computer-readable media) is provided comprising instructions that, when executed, cause a processor of a computing apparatus (e.g., a processor of the one or more servers 204) to perform the method of any of the aspects above (e.g., any of the described methods of Figures 4A, 4B or Figure 5). An example non-transitory computer-readable storage medium may be a memory (or other storage medium) and may comprised within a server (e.g., one or more servers 204, with reference to Figure 2).

## Claims

1. A computer-implemented method comprising;
receiving event information in real time;
processing the received event information into a plurality of representative data categories;
generating a plurality of simulations, wherein each simulation comprises a plurality of simulated outcomes that are each associated with one of the plurality of representative data categories;
storing the simulated outcomes for each simulation;
receiving a message from a requesting device responsive to a user input, the user input being indicative of an expression having a condition relating to the event information;
identifying a set of representative data categories associated with the expression;
determining, based on evaluating the stored simulated outcomes that are associated with the identified set to the condition, an output value that comprises the proportion of simulated outcomes of the identified set that satisfy the condition of the expression relative to non-satisfying simulated outcomes;
generating an output expression based on the output value.

2. The method of claim 1, further comprising:
converting the output value into an adjusted output value based on one or more preset criteria;
generating the output expression comprising the adjusted output value and a descriptor comprising information on the identified set of representative data categories; and
outputting the generated output expression.

3. The method of any preceding claim, wherein evaluating the stored simulated outcomes comprises:
forming a query comprising the identified set of one or more representative data categories and the related condition,
evaluating the query using the simulated outcomes that are associated with the identified set and the condition; and
determining the output value based on the proportion of simulated outcomes of the identified set that satisfy the condition of the expression relative to non-satisfying simulated outcomes.

4. The method of any preceding claim, wherein the condition is indicative of a comparison to a predicted outcome relevant to the event information.

5. The method of any preceding claim:
receiving a user request relevant to the generated output expression.

6. The method of claim 5, wherein the received event information comprises a plurality of real world outcomes, and the method further comprises:
processing the real world outcomes so as to determine one or more of the representative data categories of the identified set that are associated with the real world outcomes;
determining, from the stored simulated outcomes, a plurality of simulated outcomes that correspond to the plurality of real world outcomes;
updating the stored simulated outcomes based on the real world outcomes.

7. The method of claim 6, further comprising:
determining that the identified set of representative data categories associated with the generated output expression has been updated with real world outcomes;
determine an output result relevant to the generated output expression based on evaluating the updated stored outcomes that are associated with the identified set to the condition, the evaluating comprising:
forming a query comprising the identified set of one or more representative data categories and the related condition, and
evaluating the query based on the real world outcomes that are associated with the identified set to determine the updated output value,
wherein, if the condition of the query is satisfied, setting a result of the evaluation as true, and
wherein, if the condition of the query is not satisfied, setting a result of the evaluation as false; and
outputting the determined output result.

8. The method of any preceding claim, wherein the user input comprises a signal for determining a relevant expression so as to identify the set of representative data categories.

9. The method of claims 1 to 7, wherein the user input comprises the expression,
and the method further comprises:
processing the expression so as to identify the set of representative data categories.

10. The method of any preceding claim wherein, upon continuing to receive event information in real time:
updating the plurality of simulations to generate simulated outcomes across the plurality of representative data categories based on the received event information.

11. The method of any preceding claim, wherein, upon continuing to receive event information in real time:
processing the received event information into the plurality of representative data categories including at least one further representative data category; and
generating an updated plurality of simulations to generate simulated outcomes across the plurality of representative data categories including the at least one further representative data category, based on the received event information.

12. The method of any preceding claim, wherein each of the plurality of representative data categories are represented by at least one identifier; and
wherein the at least one identifier comprises a descriptor relevant to of an associated real world event; or
wherein the at least one identifier comprises a link to identifying an associated real world event, and optionally,
wherein the at least one identifier is represented in a data format that is consistent for each of the plurality of representative data categories across all of the received event information.

13. The method of any preceding claim, wherein simulated outcomes associated with a respective representative data category are stored in respective columns of a matrix; and
wherein each of the plurality of simulations corresponds to a vector row of the matrix, each simulation having at least one simulated outcome associated with a respective representative data category.

14. One or more servers configured to perform the method as claimed in any of claims 1 to 13.

15. A non-transitory computer-readable medium is provided comprising instructions that, when executed, cause a processor of a computing apparatus to perform the method of any of claims 1-13.
